# EUROPEAN PATENT APPLICATION

(11) **EP 4 651 570 A1**
(43) Date of publication of application: **19.11.2025**
(21) Application number: 25175114.5
(22) Date of filing: 08.05.2025
(51) Int. Cl.: H04W 48/20, H04W 84/12, H04W 92/20

(54) **ASSOCIATION TRANSFER**

(30) Priority: 17.05.2024 GB 202407019
(71) Applicant: Nokia Technologies Oy, 02610 Espoo (FI)
(72) Inventor: WILHELMI, Francisco, Gerlingen (DE); GALATI GIORDANO, Lorenzo, Stuttgart (DE); FONTANESI, Gianluca Attilio, Stuttgart (DE)
(74) Representative: Nokia EPO representatives

(57) **Abstract**

There is herein disclosed a method comprising determining that a first access point and a second access point are in a coordination agreement and determining that an association exists between a device and the first access point. The method further includes transmitting, to the second access point, a discovery request. The discovery request contains an inquiry as to whether the second access point will accept transfer of the association with the device. The method further includes receiving, from the second access point, a discovery response indicating that the second access point accepts the discovery request to transfer the association with the device. The method further includes negotiating, between the first access point and the second access point, terms of the association between the device and the second access point.

## Description

### Field

Example embodiments may relate to systems, methods and/or computer programs for wireless networks. In particular, example embodiments relate to coverage hole mitigation and association transfer in wireless networks using multi-access point co-ordination.

### Background

In computer networking, a wireless Access Point (AP) is a networking hardware device that allows a Wi-Fi (IEEE 802.11 network) compatible client device to wirelessly connect to a wired network and to other client devices. The AP usually connects to a router (directly or indirectly via a wired network) as a standalone device, but the AP can also be an integral component of the router itself. Several nodes may also work in coordination, either through direct wired or wireless connections in a Wireless Local Area Network (WLAN). The APs, in some WLAN implementations, may in the future work be in concert in a scheme called Multi-Access Point Coordination (MAPC). Two or more APs can coordinate some operations. Such coordination can include association transfer and mitigating coverage holes of APs.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for: determining that a first access point and a second access point are in a coordination agreement, determining that an association exists between a device and the first access point, transmitting, to the second access point, a discovery request, the discovery request containing an inquiry as to whether the second access point will accept transfer of the association with the device, receiving, from the second access point, a discovery response indicating that the second access point accepts the discovery request to transfer the association with the device, and negotiating, between the first access point and the second access point, terms of the association between the device and the second access point.

In some embodiments, the apparatus may further comprise means for authorising the association between the device and the second access point, wherein the authorising comprises transmitting, to the second access point, user association information for the device.

In some embodiments, the apparatus may be the first access point.

In some embodiments, the apparatus may further comprise means for determining that a first access point and a second access point are in the coordination agreement, comprises means for determining that the first access point and second access point are part of a multi-access point coordination, MAPC, group.

In some embodiments, the user association information for the device may include at least one of the following: a unique identifier for the device, a medium access control, MAC, address of the device, the terms of the association between the device and the second access point.

In some embodiments, the discovery request or the discovery response may comprise at least one association capability for the association between the second access point and the device.

In some embodiments, the at least one association capability may comprise at least one of the following: a band of operation of the device, a maximum number of devices to be supported, a minimum received signal strength indicator, RSSI, of the device, a maximum bandwidth to be shared with the device and a sharing availability calendar for the device and the second access point.

In some embodiments, the apparatus may further comprise means for negotiating terms of an association between the device and the second access point comprises transmitting, to the second access point, a user association record of the device.

In some embodiments the user association record may comprise at least one of the following: a medium access control, MAC, address of the device, a protocol version used by the device, a band of operation of the device, at least one channel width capability of the device, support for at least one specific feature by the device and at least one requirement for association with the device.

In some embodiments, the apparatus may further comprise means for monitoring the association between the device and the second access point.

In some embodiments, the apparatus the means for monitoring the association between the device and the second access point, may comprise means for tracking at least one performance indicator of the association. The performance indicator may comprise at least one of the following: a latency of a wireless connection between the device and the second access point, a usage of a wireless connection between the device and the second access point, a minimum received signal strength indicator, RSSI, of a wireless connection between the device and the second access point.

In some embodiments, the apparatus may further comprise means for transmitting, to the second access point, a disassociation request to terminate the association between the device and the second access point. In some embodiments, the apparatus may further comprise means for receiving, from the second access point, an acknowledgement of the disassociation request.

According to a second aspect, there is described an apparatus comprising means for: determining that a first access point and a second access point are in a coordination agreement, determining that an association exists between a device and the first access point, transmitting, to the first access point, a discovery request, wherein the discovery request contains an inquiry as to whether the first access point will accept transfer of the association with the device, receiving, from the first access point, a discovery response indicating that the first access point accepts the discovery request to transfer the association with the device, and negotiating, between the first access point and the second access point, terms of the association between the device and the second access point.

In some embodiments, the apparatus may further comprise means for authorising the association between the device and the second access point, wherein the authorising comprises receiving, from the first access point, user association information for the device.

In some embodiments, the apparatus may be the second access point.

In some embodiments, the means for determining that a first access point and a second access point are in the coordination agreement, may comprise means for determining that the first access point and second access point are part of a multi-access point coordination, MAPC, group.

In some embodiments, the user association information for the device may comprise at least one of the following: a unique identifier for the device, a medium access control, MAC, address of the device, and the terms of the association between the device and the second access point.

In some embodiments, at least one of the discovery request or the discovery response may comprise at least one association capability for association between the second access point and the device.

In some embodiments, the at least one association capability comprises at least one of the following: a band of operation of the device, a maximum number of devices to be supported, a minimum received signal strength indicator, RSSI, of the device, a maximum bandwidth to be shared with the device and a sharing availability calendar for the device and the second access point.

In some embodiments, the means for negotiating terms of an association between the device and the second access point may comprise receiving, from the first access point, a user association record of the device.

In some embodiments, the user association record may comprise at least one of the following: a medium access control, MAC, address of the device, a protocol version used by the device, a band of operation of the device, at least one channel width capability of the device, support for at least one specific feature by the device and at least one requirement for association with the device.

In some embodiments, the apparatus may further comprise means for monitoring the association between the device and the second access point.

In some embodiments, the means for monitoring the association between the device and the second access point, may comprise means for tracking at least one performance indicator of the association. The performance indicator may comprise at least one of the following: a latency of a wireless connection between the device and the second access point, a usage of a wireless connection between the device and the second access point, a minimum received signal strength indicator, RSSI, of a wireless connection between the device and the second access point.

In some embodiments, the apparatus may further comprise means for transmitting, to the first access point, a disassociation request to terminate the association between the device and the second access point. In some embodiments, the apparatus may further comprise means for receiving, from the first access point, an acknowledgement of the disassociation request.

According to a third aspect, there is described an apparatus comprising means for: determining that a first access point and a second access point are in a coordination agreement, determining that an association exists between a device and the first access point, means for identifying that the device is positioned in a coverage hole of the first access point, transmitting, to the first access point or the second access point, a request to transfer the association of the device with the first access point to the second access point and commencing an association between the device and the second access point.

In some embodiments, the apparatus may be the device.

In some embodiments, the apparatus may further comprise at least one of the following: means for monitoring the association between the device and the second access point, means for transmitting, to the first access point or the second access point, a disassociation request to terminate the association between the device and the second access point, or means for receiving, from the first access point or the second access point, an acknowledgement of the disassociation request.

According to a fourth aspect, there is described a method comprising: determining that a first access point and a second access point are in a coordination agreement, determining that an association exists between a device and the first access point, transmitting, to the second access point, a discovery request, the discovery request containing an inquiry as to whether the second access point will accept transfer of the association with the device, receiving, from the second access point, a discovery response indicating that the second access point accepts the discovery request to transfer the association with the device, negotiating, between the first access point and the second access point, terms of the association between the device and the second access point, and authorising the association between the device and the second access point, the authorising comprising transmitting, to the second access point, user association information for the device.

According to a fifth aspect, there is described a method comprising: determining that a first access point and a second access point are in a coordination agreement, determining that an association exists between a device and the first access point, transmitting, to the first access point, a discovery request, the discovery request containing an inquiry as to whether the first access point will accept transfer of the association with the device, receiving, from the first access point, a discovery response indicating that the first access point accepts the discovery request to transfer the association with the device, negotiating, between the first access point and the second access point, terms of the association between the device and the second access point, and authorising the association between the device and the second access point, the authorising comprising receiving, from the first access point, user association information for the device.

According to a sixth aspect, there is described a method comprising: determining that a first access point and a second access point are in a coordination agreement, determining that an association exists between a device and the first access point, identifying that the device is positioned in a coverage hole of the first access point, transmitting, to the first access point or the second access point, a request to transfer the association of the device with the first access point to the second access point; and commencing an association between the device and the second access point.

According to a seventh aspect, there is provided a computer program product comprising a set of instructions which, when executed on an apparatus, is configured to cause the apparatus to carry out the method of any preceding method definition.

According to an eighth aspect, there is provided a non-transitory computer readable medium comprising program instructions stored thereon for performing a method, of any preceding method definition.

### Brief Description of the Drawings

Example embodiments will now be described by way of non-limiting example, with reference to the accompanying drawings, in which:
FIG. 1 shows, by way of example, a network architecture of a Wi-Fi communication system.
FIG. 2 shows, by way of example, a coverage hole.
FIG. 3 shows, by way of example, a coverage hole.
FIG. 4 shows, by way of example, a relationship between APs and a device.
FIG. 5 shows, by way of example, an association transfer procedure.
FIG. 6 shows, by way of example, a first method for association transfer.
FIG. 7 shows, by way of example, a second method for association transfer.
FIG. 8 shows, by way of example, a multi-access point coordination management frame.
FIG. 9A shows, by way of example, a discovery message; FIG. 9B shows, by way of example, a discovery response message.
FIG. 10 shows, by way of example, a negotiation message.
FIG. 11 shows, by way of example, a completion message.
FIG. 12 shows, by way of example, a monitoring message.
FIG. 13A shows, by way of example, a termination message; FIG. 13B shows, by way of example, a termination acknowledgement message.
FIG. 14 shows, by way of example, a third method for association transfer.
FIG. 15 shows, by way of example, a block diagram of an apparatus.

### Detailed Description

Coverage holes are a major source of customer complaints for Wi-Fi vendors and Internet Service Providers (ISP). Coverage holes are areas where Access Points (APs) or Base Stations (BSs) cannot provide an acceptable service to their associated users due to poor signal propagation, for example, as a result of the attenuation produced by the medium and physical obstacles.

Commercial Wi-Fi APs may include proprietary coverage hole detection and mitigation mechanisms, which are executed at the Radio Resource Management, RRM, level. The main drawback of the existing methods is that they perform coverage hole mitigation through transmit power adaptation, so that potentially detected holes are attempted to be solved by increasing the transmit power level to cover the maximum area possible and reach all devices which desire to connect to an AP. This approach can contribute to increasing the interference, as APs tend to use higher power, which can severely affect the performance in an Overlapping Basic Service Set (OBSS). Furthermore, APs can reach a limited coverage area, even if using the maximum power. Thus, the mitigation of coverage holes is not guaranteed, and an improved technique is required.

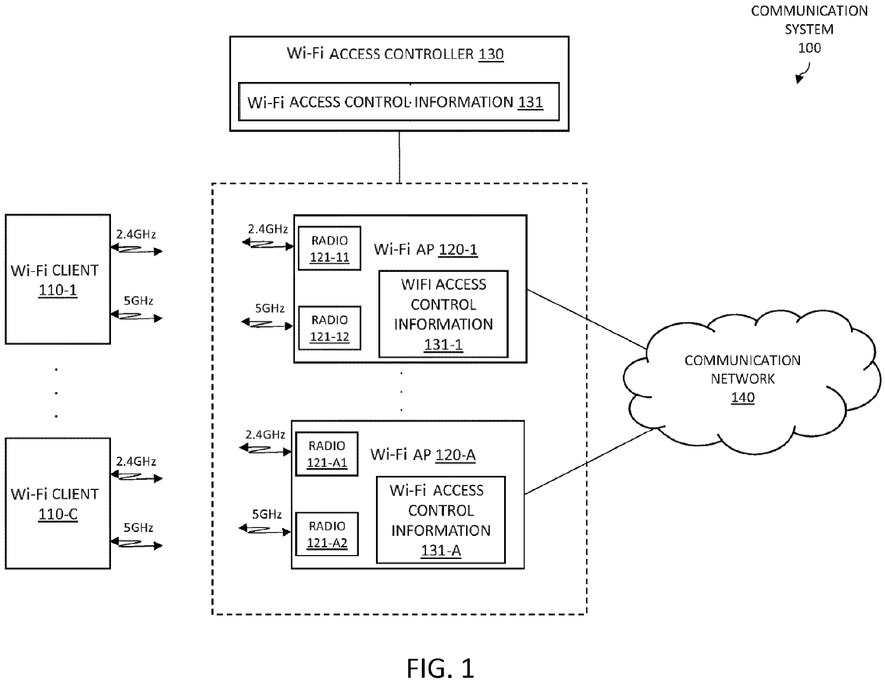

FIG. 1 depicts an example embodiment of a communication system 100 including Wi-Fi access points 120, Wi-Fi clients 110, and a controller 130 configured to control association of the Wi-Fi clients with the Wi-Fi access points. The communication system 100 of the example embodiment of FIG. 1 is one illustration of a possible Wi-Fi system provided for background information of the disclosure herein. The communication system 100 of FIG. 1 is not intended to provide a limitation on the disclosure.

The communication system 100 includes a set of Wi-Fi clients 110-1 to 110-C (collectively, Wi-Fi clients 110), a set of Wi-Fi access points (APs) 120-1 to 120-A (collectively, Wi-Fi APs 120), a Wi-Fi access controller 130, and a communication network 140. The Wi-Fi clients 110 may associate with the Wi-Fi APs 120, based on Wi-Fi access control functions supported by the Wi-Fi access controller 130, to obtain network access to the communication network 140. Alternatively, each Wi-Fi AP 120 may operate autonomously and/or independently. For example, each Wi-Fi AP 120 may have their own Wi-Fi access controller (not shown). The communication network 140 accessed by the Wi-Fi clients 110 via the Wi-Fi APs 120 may include any communications network(s) which may be utilized by Wi-Fi clients 110, such as public communication networks, private communication networks, or the like, as well as various combinations thereof (e.g., Internet-related networks, enterprise networks, data center networks, or the like, as well as various combinations thereof).

The Wi-Fi clients 110 include any devices which may associate with the Wi-Fi APs 120 to obtain network access to the communication network 140. The Wi-Fi clients 110 may support various IEEE 802.11 standards, such as one or more of 802.11 (Wi-Fi 0, 2.4GHz), 802.11b (Wi-Fi 1, 2.4GHz), 802.11a (Wi-Fi 2, 5GHz), 802.11g (Wi-Fi 3, 5GHz), 802.11n (Wi-Fi 4, 2.4/5GHz), 802.11ac (Wi-Fi 5, 5GHz), 802.11ax (Wi-Fi 6, 2.4/5/6GHz), 802.11b (Wi-Fi 1, 2.4GHz), 802.11be (Wi-Fi 7, 2.4/5/6GHz) or the like. The Wi-Fi clients 110 may support one or more Wi-Fi radio bands (e.g., single-band, dual-band, tri-band, and so forth) which may be used by the Wi-Fi clients 110 for communication with the Wi-Fi APs 120 (e.g., one or more of 2.4GHz, 5GHz, 6GHz, or the like). In the example of FIG. 1 for purposes of clarity, each of the Wi-Fi clients 110 is depicted as a dual-band device supporting the 2.4GHz band and the 5GHz band; however, it will be appreciated that Wi-Fi clients 110 may include single-band devices (e.g., supporting only one of 2.4GHz, 5GHz, 6GHz, or the like), multi-band devices supporting other numbers or combinations of Wi-Fi radio bands, or the like, as well as various combinations thereof. The Wi-Fi clients 110 may also be herein interchangeably referred to as "devices". For example, the Wi-Fi clients 110 / devices may include computers, smartphones, televisions, home control devices, appliances, Internet-of-Things (IoT) devices, and so forth.

The latest IEEE 802.11be standard has introduced an architecture whereby multiple bands can be operated concurrently by a single entity, called a multi-link device, MLD. The MLD communicates with both the Wi-Fi APs 120 and the Wi-Fi clients 110.

The Wi-Fi APs 120 are configured to support communications of the Wi-Fi clients 110 via the communication network 140. The Wi-Fi APs 120 may support various IEEE standards, such as one or more of 802.11 (Wi-Fi 0, 2.4GHz), 802.11b (Wi-Fi 1, 2.4GHz), 802.11a (Wi-Fi 2, 5GHz), 802.11g (Wi-Fi 3, 5GHz), 802.11n (Wi-Fi 4, 2.4/5GHz), 802.11ac (Wi-Fi 5, 5GHz), 802.11ax (Wi-Fi 6, 2.4/5/6GHz), 802.11b (Wi-Fi 1, 2.4GHz), 802.11be (Wi-Fi 7, 2.4/5/6GHz), or the like. The Wi-Fi APs 120 may support one or more Wi-Fi radio bands which may be used by the Wi-Fi clients 110 for communication with the Wi-Fi APs 120 (e.g., one or more of 2.4GHz, 5GHz, 6GHz, or the like). The Wi-Fi APs 120 each support a set of Wi-Fi radios 121 (illustratively, Wi-Fi AP 120-1 supports Wi-Fi radios 121-11 and 121-12 and Wi-Fi AP 120-A supports Wi-Fi radios 121-A1 and 121-A2) configured to support Wi-Fi-based communications of the Wi-Fi clients 110. In the example of FIG. 1 for purposes of clarity, each of the Wi-Fi APs 120 is depicted as a dual-band device supporting the 2.4GHz band and the 5GHz band; however, it will be appreciated that Wi-Fi APs 120 may include single-band devices (e.g., supporting only one of 2.4GHz, 5GHz, 6GHz, or the like), multi-band devices supporting other numbers or combinations of Wi-Fi radio bands, or the like, as well as various combinations thereof. The Wi-Fi APs 120 are configured to support control over association of Wi-Fi clients 110 with the Wi-Fi APs 120. The Wi-Fi APs are configured to support control over association of Wi-Fi clients 110 with the Wi-Fi APs 120 by receiving association requests from the Wi-Fi clients 110 in which the Wi-Fi clients 110 request association with particular Wi-Fi radio bands of the Wi-Fi APs 120 and the Wi-Fi APs 120 accept or deny the association requests for permitting or preventing association of the Wi-Fi clients 110 with the Wi-Fi APs 120. It will be appreciated that the Wi-Fi APs 120 also may be referred to herein as Wi-Fi routers.

The Wi-Fi access controller 130 may be configured to support control over association of Wi-Fi clients 110 with Wi-Fi APs 120. The Wi-Fi access controller 130 may be configured to support control over association of Wi-Fi clients 110 with Wi-Fi APs 120 based on Wi-Fi access control information 131 which is determined by the Wi-Fi access controller 130 (illustrated as the Wi-Fi access control information 131 maintained on the Wi-Fi access controller 130) and provided by the Wi-Fi access controller 130 to the Wi-Fi APs 120 for use by the Wi-Fi APs 120 in controlling association of Wi-Fi clients 110 with the Wi-Fi APs 120. The Wi-Fi access control information 131 maintained on the Wi-Fi APs 120 may be used by the Wi-Fi APs 120 in handling association requests from the Wi-Fi clients 110, thereby enabling the Wi-Fi APs 120 to control association of Wi-Fi clients 110 with the Wi-Fi APs 120 and Wi-Fi radio bands of the Wi-Fi APs 120. In some Wi-Fi communication systems controlling of association may be directly done by the Wi-Fi AP 120 to which a Wi-Fi client 110 is trying to associate. In other Wi-Fi communication systems, controlling of association may be achieved through a centralized system (e.g., using 802.1x), where a server is in charge of managing user associations. In a centralized system, the Wi-Fi AP 120 may simply forward an association request to the server. The disclosure herein may be applied to both methods for controlling association.

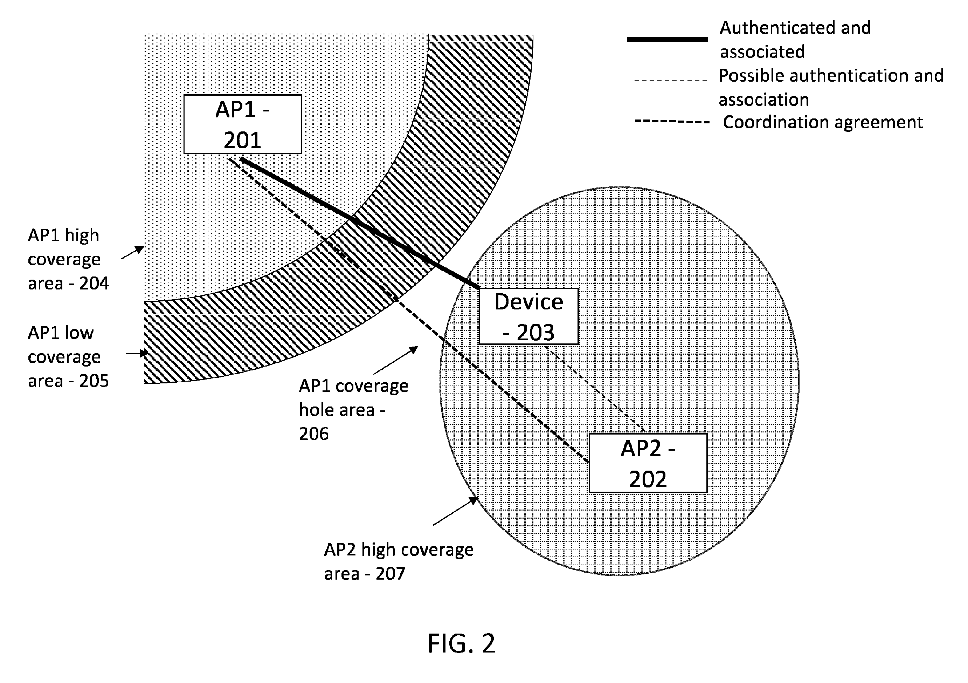

FIG. 2 depicts an example embodiment of a communication system including Wi-Fi Access Point 1 (AP1) 201, Wi-Fi Access Point 2 (AP2) 202 and device 203. AP1 201 and AP2 202 may correspond to the Wi-Fi APs 120 as depicted in FIG. 1 and may also be referred to as Wi-Fi routers. The device 203 may be one of the Wi-Fi clients 110 as depicted in FIG. 1. The device 203 may be a portable computing device that includes communication devices, including, but not limited to, the following types of devices: a mobile station (mobile phone), smartphone, personal digital assistant, handset, device using a wireless modem (alarm or measurement device, etc.), laptop and/or touch screen computer, tablet, game console, notebook, a vehicle, fixed wireless access (FWA) and multimedia device. It should be appreciated that the device 203 may also be a nearly exclusive uplink only device, of which an example is a camera or video camera loading images or video clips to a network. The device 203 may also be a device having capability to operate in Internet of Things (IoT) network which is a scenario in which objects are provided with the ability to transfer data over a network without requiring human-to-human or human-to-computer interaction.

The example embodiment shown in FIG. 2 may be located in any building, such as a house, commercial building or apartment block, or alternatively could be an outdoors location.

AP1 201 is in a first communication session with the device 203 and as such the device 203 is authenticated and associated with AP1 201. The authentication and/or association may be conducted via known mechanisms and standardized messages, for example via a probe request and response, an authentication request and response and an association request and response. Device 2023 is not currently authenticated or associated with AP2 202.

Both AP1 201 and AP2 202 are in a coordination agreement. The coordination agreement may be formalized through an MAPC group. The MAPC, multi-access point coordination scheme, is due to be included in the Wi-Fi 8 for which standardization has begun and is expected to conclude in the future. As such, AP1 201 and AP2 202 may share information about associated and authenticated devices (e.g. device 203). The association agreement (e.g. MAPC group) means that AP1 201 and AP2 202 can communicate with each other using MAPC-specific signaling. Further access points (not shown) may form part of the MAPC group.

AP1 201 has a high coverage area 204 which has the highest strength radio signal and a low coverage area 205 which has a lower strength radio signal. The device 203 is located in a coverage hole area 206 of AP1 201. A coverage hole of AP1 201 is an area which is not covered by AP1 201, this means that the signal strength of AP1 is not sufficiently strong enough to reach the area that the device 203 is located in. AP2 also has a high coverage area 207 that has a strong signal strength. The device 203 is located within the high coverage area 207 of AP2 202 and as such it would be desirable if the device could use AP2 202 rather than AP1 201 to provide improved service. Although, AP2 202 is not currently authenticated or associated with the device 203, the proposed apparatus and method provide a solution to allow this via the coordination agreement.

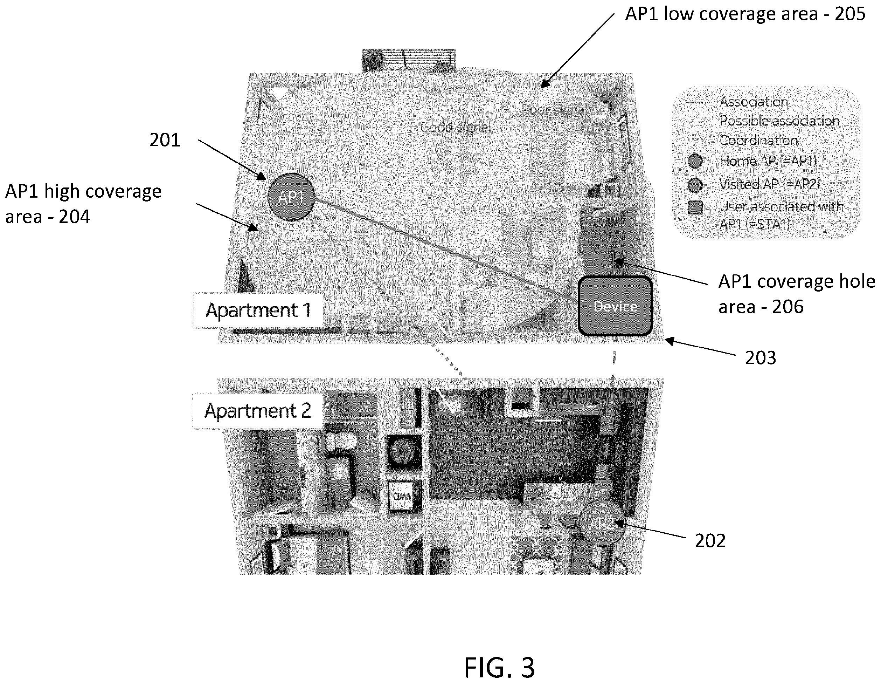

FIG. 3 shows a further example embodiment of a communication system. In FIG. 3 the example of FIG. 2 is shown as apartment block by way of demonstration. The coverage hole area 206 of AP1 201 is located in Apartment 1 where the signal strength of AP1 201 is not sufficient to reach the device 203. However, AP2 202 in Apartment 2 may have sufficient signal strength to serve the device 203 in the coverage hole.

By leveraging the advents of MAPC in Wi-Fi 8, the disclosure provided herein proposes a new coverage hole mitigation method by allowing association transfer between AP1 201 and AP2 202. Through the MAPC framework, private Aps are enabled to exchange and transfer users' associations among them. The proposed approach can be of high relevance in residential scenarios such as the example of FIG. 3, where multiple private Aps can be leveraged to provide an overall better user experience, although the proposed approach can also be used in many other scenarios. The proposed approach may also complement mesh deployments. A mesh Wi-Fi network is composed of multiple devices that complement the functions of an access point to provide seamless connectivity to users in a larger area compared to the case with a single access point device. Mesh deployments provide a way to extend coverage and provide enhanced performance, however, the proposed approach ensures that in the case a device ends up in a coverage hole, the chances of being served by at least one AP in a coordinate agreement are significantly increased thereby preventing customer complaints.

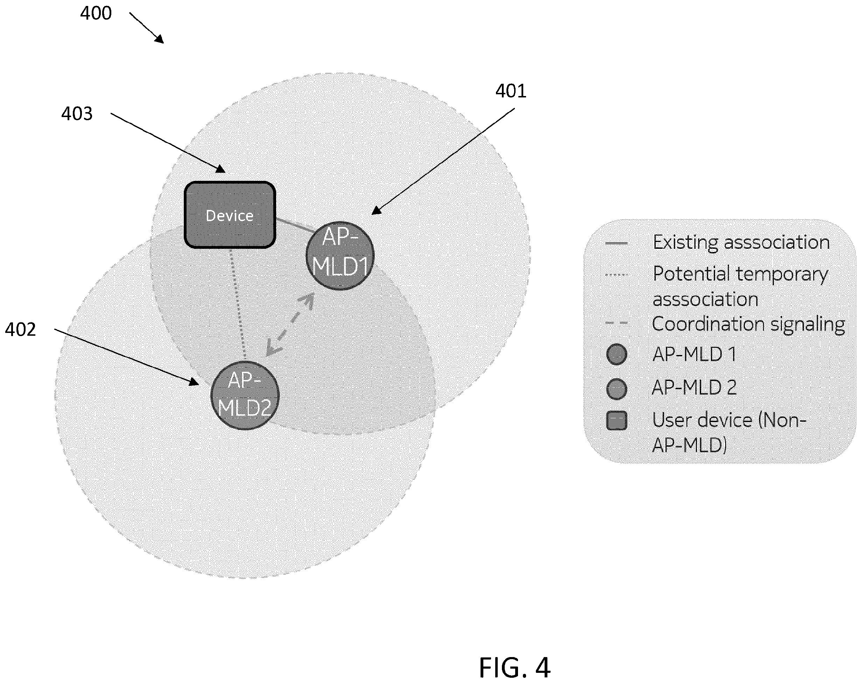

FIG. 4. Shows, by further way of demonstration, a relationship between a first access point 401, a second access point 402 and a device 403. The first access point 401 and second access 402 may be access point multi-link devices (AP-MLDs). The device 403 is a non-access point multi-link device (non-AP-MLD). The first access point 401 (AP-MLD1) is authenticated and associated with the device 403 (as shown by the solid line in FIG. 4). The authentication and/or association may be conducted via known mechanisms and standardized messages, for example via a probe request and response, an authentication request and response and an association request and response. The second access point 402 (AP-MLD2) is not currently authenticated or associated with the device 403 although a potential temporary association is possible (as shown by the dashed line in FIG. 4).

Both AP-MLD1 401 and AP-MLD2 402 are in a coordination agreement. The coordination agreement may be a MAPC group. The MAPC, multi-access point coordination scheme, is due to be included in the Wi-Fi 8 for which standardization has begun and is expected to conclude in the future. As such, AP-MLD1 401 and AP-MLD2 402 may share information about associated and authenticated devices (e.g. device 403). The association agreement (e.g. MAPC group) means that AP-MLD1 401 and AP-MLD2 402 can communicate with each other using MAPC-specific signaling. Therefore, AP-MLD1 401 and AP-MLD2 402 are able to communicate via coordination signaling, either through the air or by using wired connections (as shown by the dashed arrow in FIG. 4). Further AP-MLDs (not shown) may also form part of the MAPC group.

Coverage holes have a detrimental effect on a user's Wi-Fi experience, as they lead to radio link failures when users move to poor coverage areas. Thus, mitigating the effects of coverage holes by allowing association transfer of a device between Aps is important in Wi-Fi and wireless networks in general.

The disclosure herein aims to transfer associations to allow the device 403 to seamlessly connect to other AP-MLDs different than the one to which they explicitly performed the authentication and association. There are two approaches discussed herein. The first approach relates to 'host AP' initiated association transfer, whereby a 'host AP' (e.g. AP-MLD1 401) shares its association with a device with other AP-MLDs (e.g AP-MLD 402) within the same coordination group. The second approach relates to 'visited AP' initiated association transfer, whereby a 'visited AP' (e.g. AP MLD2 402) onboards and serves new users from other Aps (e.g. AP-MLD1 401) within the same coordination group.

An association sharing request can be triggered for different reasons. One relevant example, as discussed in relation to FIGS 2 and 3, is to solve coverage holes, although other reasons may also be possible. Upon reporting a higher signal quality perceived from a 'visited AP', a 'host AP' may decide to share the association with the 'visited AP'.

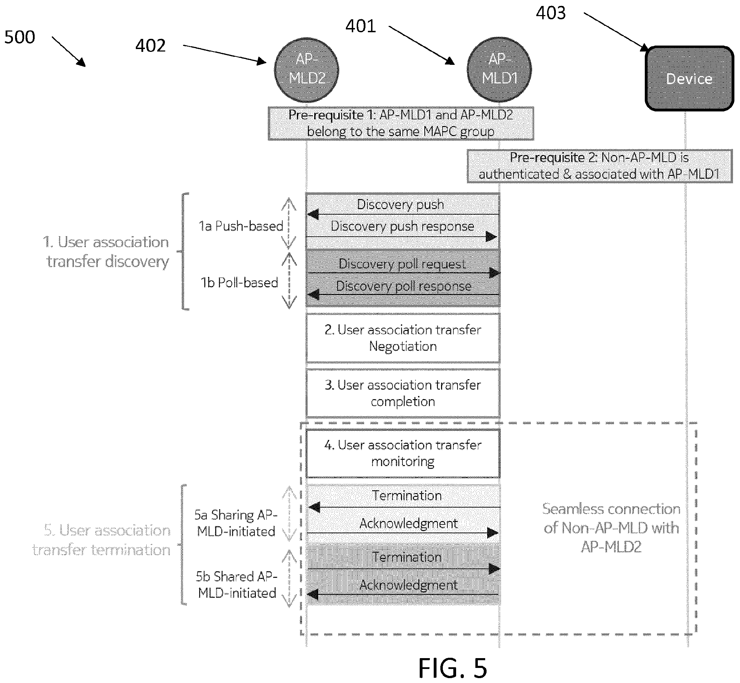

FIG. 5. Shows, by way of example, an overview of the proposed association transfer procedure between AP-MLD1 401 and AP-MLD2 402 and the device 403. There are several steps in the proposed coverage hole mitigation procedure, these include Pre-requisite 1, Pre-requisite 2, Step 1 - user association transfer discovery, Step 2 - user association transfer negotiation, Step 3 - user association transfer complete, Step 4 - user association transfer monitoring and Step 5 - user association transfer termination. Each of these steps will be discussed below in turn in relation to "host AP initiated" and "visited AP initiated" association transfer.

### Host AP initiated association transfer.

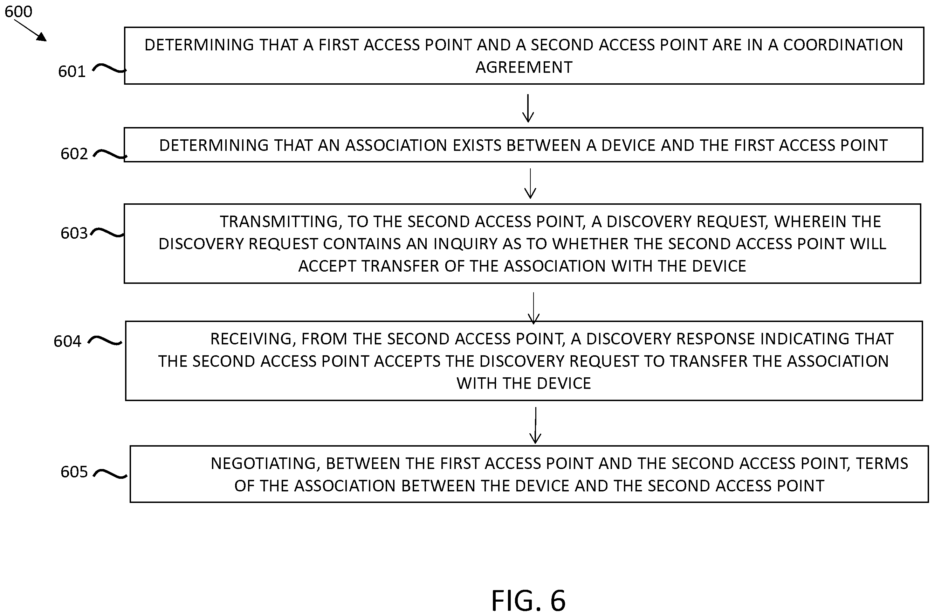

FIG. 6 shows, by way of example, a flowchart of a method 600 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 600 may be carried out by a host AP, e.g., AP-MLD1 401. This may be referred to herein as 'host AP initiated' association transfer. This method 600 is motivated by an association transfer performed at a 'host AP' which has been previously authenticated and associated with a device 403 and is in a coordination agreement with a visited AP, e.g., AP-MLD2 402.

The method 600 of FIG. 6 comprises a first operation 601 of determining that that a first access point, AP-MLD1, 401, and a second access point, AP-MLD2 402 are in a coordination agreement. The first operation 601 may comprise determining that AP-MLD1 401 and AP-MLD2 402 are part of a MAPC group. In other words, the coordination agreement could be a MAPC coordination agreement. This means that AP-MLD1 401 and AP-MLD2 402 can communicate with each other using MAPC-specific signaling. Determining that AP-MLD1 401 and AP-MLD2 402 are in a coordination agreement is a first prerequisite of the method 500 (for example, as shown in FIG. 5 by "Pre-requisite 1").

The method 600 of FIG. 6 comprises a second operation 602 of determining that an association exists between a device 403 and AP-MLD1 401. The determining that an association exists between the device 403 and AP-MLD1 401 may comprise determining that the device 403 is in a current wireless communication session with AP-MLD1 401 and/or that is it otherwise associated with the device 403 and/or that it has been authenticated by AP-MLD1 401. As such, the device 403 is trusted by AP-MLD1 401. Determining that the device 403 is associated with AP-MLD1 401 and that is has been authenticated by AP-MLD1 401 is a second prerequisite of the method 600 (for example, as shown in FIG. 5 by "Prerequisite 2").

The method 600 of FIG. 6 further comprises a third operation 603 of transmitting, to AP-MLD2 402, a discovery request. The discovery request contains an inquiry as to whether AP-MLD 402 will accept transfer of the association with the device 403. The discovery request proposes to AP-MLD2 402 the transfer of the association with the device 403. The purpose of the discovery request is to initiate a user association transfer by discovering coordinated AP-MLD that may be peers willing to serve the user of the device 403. The third operation 603 is illustrated by "1a push based - discovery push" as shown in FIG. 5. During the third operation 603, AP-MLD1 401 sends a push message with a user association transfer request to AP-MLD2 402.

The method 600 of FIG. 6 further comprises a fourth operation 604 of receiving, from AP-MLD2 402, a discovery response indicating that the AP-MLD2 402 accepts the discovery request to transfer the association with the device 403. In other words, AP-MLD2 402 replies with a decision (accept or not). The fourth operation 604 is illustrated by "1b push based - discovery push response" as shown in FIG. 5. The discovery response may optionally include reasons for a potential rejection of the requested user association transfer and other relevant information. In the case of a rejection, the method would proceed no further and AP-MLD1 401 would continue to look for a suitable AP-MLD which association could be transferred to.

The discovery request and/or the discovery response may include at least one association capability for the association between the AP-MLD2 402 and the device 403. The purpose of the association capability is for AP-MLD1 401 to express to the potential transfer association AP-MLD2 402 the capabilities that will be necessary to transfer the association of the device 403 from AP-MLD1 401 to AP-MLD 402. Furthermore, AP-MLD2 402 can reply to AP-MLD1 401 with whether it meets these the desired association capabilities. The at least one association capability may include at least one of the following: a band of operation of the device 403, a maximum number of devices 403 to be supported, a minimum received signal strength indicator, RSSI, of the device 403, a maximum bandwidth to be shared with the device and a sharing availability calendar for the device 403 and AP-MLD2 402.

The method 600 of FIG. 6 further comprises a fifth operation 605 of negotiating, between AP-MLD1 401 and AP-MLD2 402, terms of the association between the device 403 and the AP-MLD2 402. The fifth operation 605 is illustrated by "2. User association transfer negotiation" as shown in FIG. 5. Both AP-MLD1 401 and AP-MLD2 402 respectively negotiate the terms and conditions under which AP-MLD2 202 can serve the device 403 which association is to be transferred. The negotiation of the transfer includes informing each about the potential capabilities to be shared and compatibility requirements. Moreover, the negotiation can also include mechanisms to enforce trust in the user association transfer (e.g., two-way challenges to verify the legitimacy of the user association transfer). Negotiating terms of an association between the device 403 and AP-MLD2 402 may comprise transmitting, to AP-MLD2 402, a user association record of the device. The user association record may comprise at least one of the following: a medium access control, MAC, address of the device 403, a protocol version used by the device 403, a band of operation of the device 403, at least one channel width capability of the device 403, support for at least one specific feature by the device 403, and at least one requirement for association with the device 403. The UAR is used by the AP-MLD2 402 to determine whether it can serve the device 403. Other relevant information can be shared to further support user association transfers. Some examples are calendar information which may to indicate the periods where AP-MLD2 402 will turn off, so that the AP-MLD1 401 can take over or rewarding data to incentivize the association sharing.

The method 600 of FIG. 6 further optionally comprise a sixth operation (not shown) of authorising the association between the device 403 and AP-MLD2 402. The sixth operation 606 is illustrated by "3. User association transfer completion" as shown in FIG. 5. The authorising comprises transmitting, to AP-MLD2 402, user association information for the device. AP-MLD1 401 and AP-MLD2 402 exchange the user association information and perform the user association transfer. For that, AP-MLD1 401 transfers the identity of the user and the conditions upon the service must be provided to the AP-MLD2 402. AP-MLD2 402 creates a new Association ID (AID) for each new onboarded device 403 to differentiate between different devices for which association may be transferred. The successful user association transfer to the AP-MLD2 402 may be acknowledged with a status code for each shared association record (e.g., 1 if successful, 0 if unsuccessful).

The user association information for the device 403 may comprise at least one of the following: a unique identifier for the device 403, a medium access control, MAC, address of the device 403, the terms of the association between the device 403 and AP-MLD2 402.

The method 600 of FIG. 6 may optionally comprise a further operation of monitoring the association between the device 403 and AP-MLD2 402. The monitoring is illustrated by "4. User association transfer monitoring" as shown in FIG. 5. The purpose of the monitoring is to determine information for enabling further decisions on the status of the transferred user associations. Monitoring the association between the device 403 and AP-MLD2 402, may include tracking at least one performance indicator (i.e. a key performance indication) of the association. The performance indicator may comprise at least one of the following: a latency of a wireless connection between the device 403 and AP-MLD2 402, a usage of a wireless connection between the device 403 and AP-MLD2 402, and a minimum received signal strength indicator, RSSI, of a wireless connection between the device 403 and AP-MLD2 402. Therefore, AP-MLD1 401 may be able to make a decision about whether to change the terms of the association transfer to AP-MLD2 402 or terminate the association transfer based on the performance indicators. Constant monitoring of the connection between the device 403 and AP-MLD2 402 allows for constant evaluation of whether the association transfer is worthwhile and in the best interests of the device. As such, a decision can be made to terminate the association transfer or move it to a different AP-MLD in the coordination agreement which may better serve the needs of the device 403.

The method 600 of FIG. 6 may optionally comprise further operations of transmitting, to AP-MLD2 402, a disassociation request to terminate the association between the device 403 and AP-MLD2 402 and receiving, from AP-MLD2 402, an acknowledgement of the disassociation request. The disassociation request and acknowledgement are illustrated by "5a. Sharing AP-MLD initiated termination and acknowledgement" as shown in FIG. 5. The disassociation signaling may also be informative as a disassociation request and acknowledgment type of messaging may not be required. This may be the case, for example, if the device 403 moves away from the coverage area or otherwise disconnects. In this case AP-MLD2 402 may inform the AP-MLD1 401 that the device 403 has been disassociated.

### Visited AP initiated association transfer.

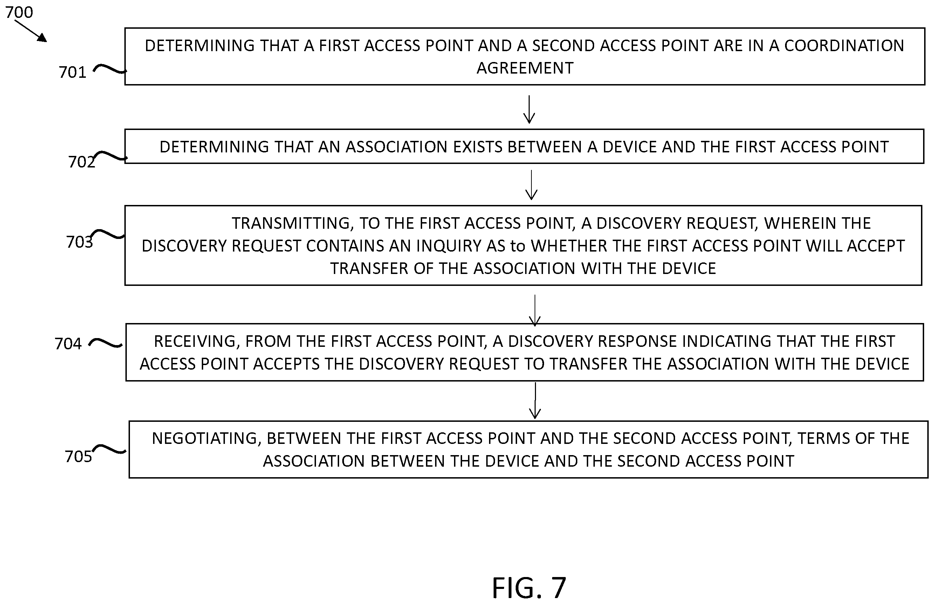

FIG. 7 shows, by way of example, a flowchart of a method 700 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 700 may be carried out by a visited AP, e.g., AP-MLD2 402. This may be referred to herein as 'visited AP initiated' association transfer. This method 700 is motivated by an association transfer performed at a 'visited AP' e.g. AP-MLD2 402 which in a coordination agreement with a host AP, e.g. AP-MLD1 401. The device 403is not yet associated with the 'visited AP' AP-MLD2 402, however, an AP-MLD2 402 based approach used to request to transfer of the association from AP-MLD1 401 to AP-MLD2 402.

The method 700 of FIG. 7 comprises a first operation 701 of determining that AP-MLD1 401 and AP-MLD2 402 are in a coordination agreement. The method 700 of FIG. 7 comprises a second operation 702 of determining that an association exists between a device 403 and AP-MLD1 401. The first operation 701 and second operation 702 of FIG. 7 are equivalent to the first operation 601 and second operation of FIG. 6 and are also demonstrated by "Pre-requisite 1" and "Prerequisite 2" as shown in FIG. 5.

The method 700 of FIG. 7 comprises a third operation 703 of transmitting, to the AP-MLD1 401, a discovery request. The discovery request asks whether AP-MLD1 401 will accept transfer of the association with the device 403. The third operation 703 is illustrated by "1b poll based - discovery poll request" as shown in FIG. 5. The method 700 of FIG. 7 comprises a fourth operation 704 of a receiving, from AP-MLD1 401, a discovery response indicating whether AP-MLD1 401 accepts or the discovery request to transfer the association with the device 403. In other words, AP-MLD2 402 sends a poll message with an association transfer request to AP-MLD1 401. The AP-MLD1 401 then replies either positively or negatively to the request, also indicating reason codes (if applicable). The poll-based approach is motivated by the possibility that certain events for initiating the user association transfer can be triggered from 'visited AP' AP-MLD2 402. The fourth operation 704 is illustrated by "1b poll based - discovery poll response" as shown in FIG. 5. The discovery request or the discovery response may also at least one association capability as previously discussed in relation to the 'host AP' initiated association transfer.

The method 700 of FIG. 7 comprises a fifth operation 705 of negotiating, between the AP-MLD1 401 and AP-MLD2 402, terms of the association (in case association is authorized) between the device 403 and AP-MLD2 402. Negotiating terms of an association between the device 403 and AP-MLD2 402 may include receiving, from AP-MLD1 401, a user association record of the device. The method 700 of FIG. 7 may optionally comprise a sixth operation 706 ((not shown) of means for authorising the association between the device 403 and AP-MLD2 402. The authorising comprises receiving, from AP-MLD1 401, user association information for the device 403. The fifth operation 705 and sixth operation 706 of FIG. 7 are equivalent to the fifth operation 605 and sixth operation 606 of FIG. 6 and are also demonstrated by "2. User association transfer negotiation" and 3. Use association transfer completion" as shown in FIG. 5.

The method 700 of FIG. 7 may optionally comprise a further operation of monitoring the association between the device 403 and AP-MLD2 402. The monitoring is illustrated by "4. User association transfer monitoring" as shown in FIG. 5. Monitoring the association between the device 403 and AP-MLD2 402, may include tracking at least one performance indicator (i.e. a key performance indicator) of the association.

The method 700 of FIG. 7 may optionally comprise further operations of transmitting, to AP-MLD1 401, a disassociation request to terminate the association between the device 403 and AP-MLD2 402 and receiving, from AP-MLD1 401, an acknowledgement of the disassociation request. The disassociation request and acknowledgement are illustrated by "5b. Shared AP-MLD initiated termination and acknowledgement" as shown in FIG. 5.

The proposed methods allow for benefits in residential and industrial networks.

In residential networks coverage holes can be addressed via the transfer of association between AP-MLDs, thus improving the user experience in Wi-Fi. Consumers could have means to decide whether this proposed method can be enabled or not and may determine co-ordination groups to which the coordination would be enabled (e.g., through manually introducing the IDs of the APs from the configuration of the home AP). Furthermore, in industrial networks, while some methods for association transfer already exist, current association transfers happen in a semi-static way. Using the proposed procedure implemented in a standard would allow for faster and more dynamic reactions. In both the residential and industrial environment, the main advantage of the proposed methods is that the coordination happens at the protocol level, leveraging on standardized procedure rather than proprietary, thus boosting interoperability and potential benefits.

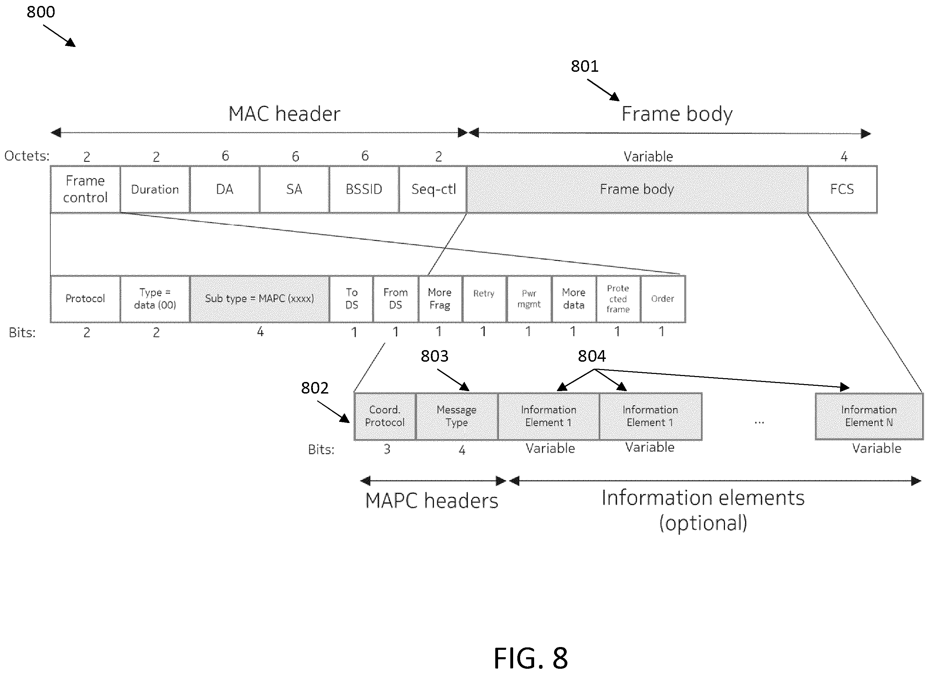

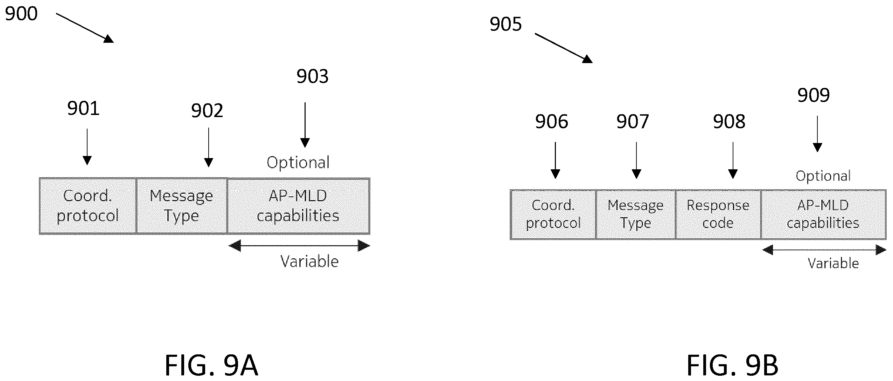

The methods proposed require an existence of a MAPC framework, which allows coordinated AP-MLDs exchanging specific signaling for various coordination use cases. The general MAPC framework may be defined by a MAPC management frame 800 as illustrated in FIG. 8. The MAPC management frame 800 is used by any type of established coordination mechanism to enable the necessary signaling. MAPC management frame 800 proposed in FIG. 8 can be for standardized user association transfer messages, thus specifically enabling the methods as defined in FIGS. 6 and 7. FIGS. 9 to 13 propose contents of the messages for performing the steps of FIGS. 6 and 7.

The messages may be defined in the frame body 801 as shown in FIG. 8 to enable the specific type of coordination corresponding to user association transfer. The type of coordination of user association transfer is indicated in a coordination protocol field 802 of the frame body 801. The different defined messages are identified through different values in a message type 803 field of the frame body 801. Moreover, different information elements 804 can be included in the same message (e.g., to send information about different devices), depending on the message type.

An example discovery request 900 is illustrated in FIG. 9A and includes the fields coordination protocol 901, message type 902 and AP-MLD capabilities 903. By way of example, in a discovery request the coordination protocol 901 may be set to a "user association transfer" message and the message type 902 may indicate whether the discovery message is 'host AP' initiated discovery request or a 'visited AP' discovery request. The AP-MLD capabilities 903 field may include the at least one association capability of the a 'visited AP' to support users from the 'host AP'. AP-MLD capabilities 903 field may include the following information: a band of operation of the device, a maximum number of devices to be supported, a minimum received signal strength indicator, RSSI, of the device, a maximum bandwidth to be shared with the device (e.g., 10%) and a sharing availability calendar (e.g., from 23h to 5h) for the device 403 and AP-MLD2 402.

An example discovery response 905 is illustrated in FIG. 9B and includes the fields coordination protocol 906, message type 907, response code 908 and AP-MLD capabilities 909. By way of example, in a discovery response 905 the coordination protocol 906 may be set to a "user association transfer" message and the message type 907 may indicate whether the discovery message is 'host AP' initiated discovery request or a 'visited AP' discovery request. The response code 908 field indicates whether an AP-MLD is willing to perform the user association transfer (e.g., set to 1) or not (e.g., set to 0). The AP-MLD capabilities 909 field may also include the at least one association capability to respond to the requested at least one association capability requested in the discovery request.

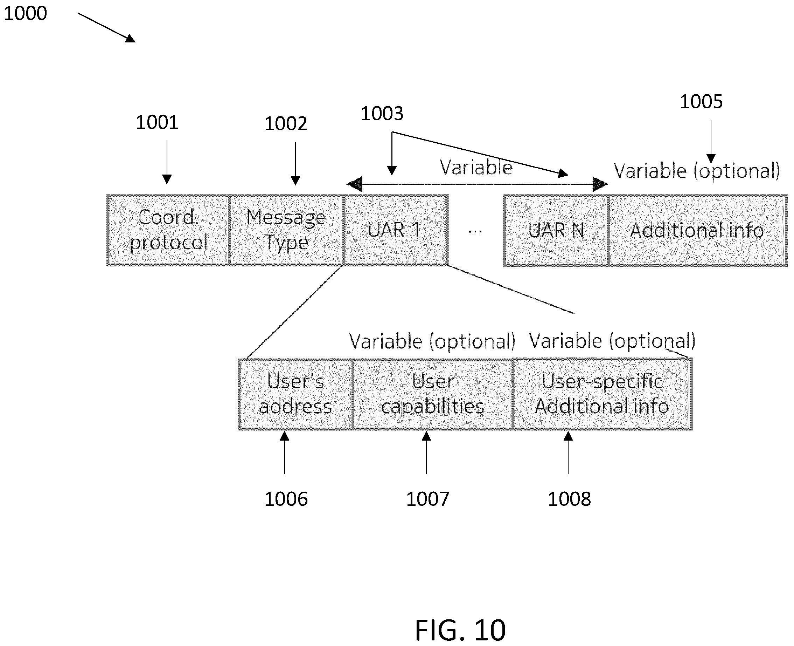

An example negotiation message 1000 is illustrated in FIG. 10 and includes the fields coordination protocol 1001, message type 1002, at least one a user association record (UAR) 1003, and additional information 1005. The negotiation message is used to exchange information and negotiate the terms for potential user association transfers between coordinated AP-MLDs. By way of example, in a negotiation message 1000 the coordination protocol 1001 may be set to a "user association transfer" message and the message type 1002 may indicate the message is a negotiation message and, optionally, also the subtype of message, which may include, for instance, messages for requesting information, renegotiating the terms, challenging the other AP-MLD (e.g., for enforcing trust). The additional information field 1005 may include other relevant information to be shared to further support user association transfers. Some examples of information shared in the additional information field 1005 are calendar information to indicate the periods where the host-AP will turn off, so that the visited-AP can take over or rewarding data to incentivize the association sharing. The UAR field 1003 contains information about a specific device association to be transferred. Where multiple devices are to have their association transferred, several UARs can be included in the same message. The UAR field 1003 may comprise information regarding the user address (or device address) 1006, the user capabilities 1007 and user specific additional information 1008. The user's address 1006 includes the address of the user and, in particular, may include the MAC address of the device which association is to be transferred. The user capabilities field 1007 may indicate the capabilities of the device which association is to be transferred. The user capabilities field 1007 includes information such as a protocol version used by the device (e.g., 802.11n/ac/ax), a band of operation of the device (e.g., 2.4 GHz, 5 GHz), at least one channel width capability of the device (e.g., 20 MHz, 40 MHz), support for at least one specific feature by the device and at least one requirement for association with the device. The user specific additional information field 1008 may include diverse information, depending on the use case and the subtype of the negotiation message. Examples of information to be included in user specific additional information field 1008 are the requirements for serving the user, measurements from the point of view of the host-AP (e.g., the RSSI perceived from the user under consideration), analytics and statistics (e.g., traffic patterns specific to the user).

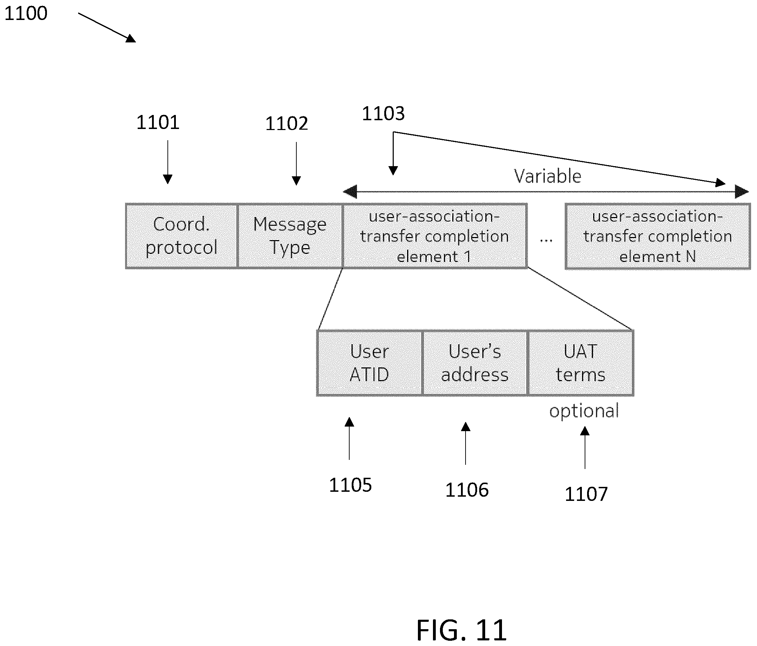

An example completion message 1100 is illustrated in FIG. 11 and includes the fields coordination protocol 1101, message type 1102, and at least one user association transfer complete element 1103. The completion message is used by a 'host AP' to confirm the transfer of the user association onto the agreed 'host AP' within the same MAPC group. The completion message 1100 may be equivalent to the method of authorising the association between the device and AP-MLD2 402, as discussed in steps 606 and 706 in FIGS. 6 and 7 respectively. By way of example, in a completion message 1100 the coordination protocol 1101 may be set to a "user association transfer" message and the message type 1102 may indicate the message is a completion message. The user association transfer complete message includes user association information. The user association information may include the following: a unique identifier for the device, an address of the device (i.e., users address 1106) and the terms (i.e., user association terms, UAT, terms) of the association between the device and the AP-MLD. The unique identifier may include a user association transfer ID (ATID) 1105. This ATID is used to manage the association record among AP-MLDs. This identifier is different from the Association ID (AID) used by each AP-MLD to handle user associations.

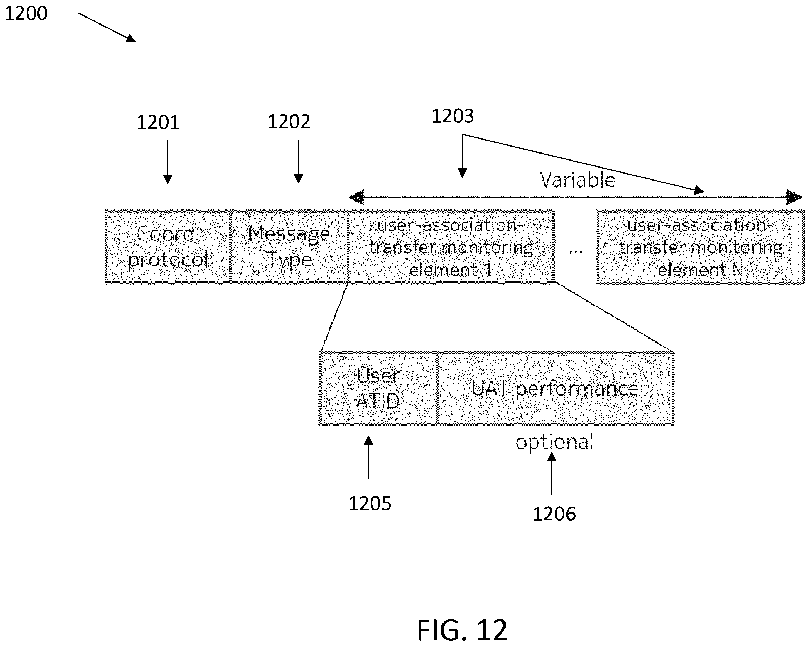

An example monitoring message 1200 is illustrated in FIG. 12 and includes the fields coordination protocol 1201, message type 1202, and at least one user association transfer monitoring element 1203. The monitoring message 1200 is used by either the 'host AP' or 'visited AP' to exchange information regarding the performance of an active user association transfer. By way of example, in a completion message 1200 the coordination protocol 1201 may be set to a "user association transfer" message and the message type 1202 may indicate the message is a monitoring message and, optionally, the subtype of message, which may include, for example, a monitoring information request or a monitoring information response. The user association transfer monitoring element 1203 may be sent for each device to be monitored. Several monitoring elements can be included in the same message, including the ATID identifier 1205 used to manage the association record among AP-MLDs. The user association transfer monitoring element 1203 may also include a user association transfer performance 1206 field including relevant monitoring information, including various key performance indicators such as latency of a wireless connection between a device and an AP-MLD, a usage of a wireless connection between a device and an AP-MLD, a minimum received signal strength indicator, RSSI, of a wireless connection between a device and an AP-MLD.

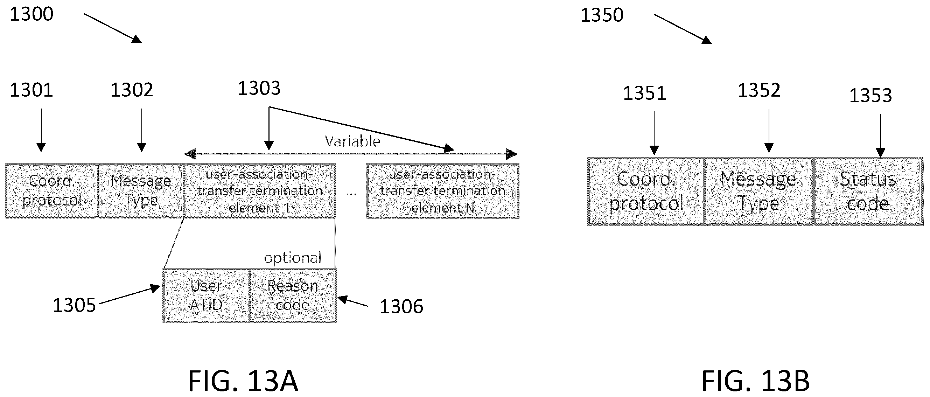

An example disassociation message 1300 is illustrated in FIG. 13A and includes the fields coordination protocol 1301, message type 1302, and at least one user association transfer termination element 1303. The disassociation message 1300 is used by either the 'host AP' or 'visited AP' to inform about the termination of association transfers. By way of example, in a disassociation message 1300 the coordination protocol 1301 may be set to a "user association transfer" message and the message type 1302 may indicate that the message is for termination. The user association transfer termination element 1303 may be sent for each user association transfer to be terminated. Several termination elements can be included in the same UAT-termination message. The user association transfer termination element 1303 may include a user ATID 1305 to identify the identity of the devices to disassociate. The user ATID 1305 is used to manage the association record among AP-MLDs. The user association transfer termination element 1303 may also include a reason code 1306 which is provided to indicate the reason of the disassociation. Example reason codes are described in Table 1.

An example acknowledgement message 1350 is illustrated in FIG. 13B and includes the fields coordination protocol 1351, message type 1352, and a status code 1353. The acknowledgement message 1350 can be used to acknowledge a completion message 1100 or a disassociation message 1300. By way of example, in an acknowledgment message 1300 the coordination protocol 1351 may be set to a "user association transfer" message and the message type 1352 may indicate that the message is an acknowledgement. The acknowledgement message 1350 includes detailed status codes 1353 for each received user's association sharing record. The status codes 1353 indicate the outcome of the provided acknowledgement message. Example status codes are described in Table 2.

User association transfer codes are used to provide details about the decisions made by a given AP-MLD on receiving a particular request from another coordinated AP-MLD. WLAN status codes (a field of 16 bits length) are leveraged and extended to support the proposed user association transfer mechanism.

The complete lists of codes are described in Table 1 and Table 2.

**Table 1 - WLAN reason codes, extended to support user association transfer.**

| **WLAN reason code** | **Description** |
|---|---|
| 0 | Reserved |
| 1 | Unspecified |
| 2 | Prior authentication is not valid |
| 3 | Device has left the basic service area or extended service area and is de-authenticated |
| 4 | Inactivity timer expired and device was disassociated |
| 5 | Disassociated due to insufficient resources at the access point |
| 6 | Incorrect frame type or subtype received from unauthenticated device |
| 7 | Incorrect frame type or subtype received from unassociated device |
| 8 | Device has left the basic service area or extended service area and is disassociated |
| 9 | Association or reassociation requested before authentication is complete |
| ... | ... |
| N | Device disassociated; Time of visitor expired |
| N+1 | Device disassociated; Visiting AP is going to sleep mode |
| N+2 | Device disassociated; Device cannot be reached |
| N+3 | Device disassociated; Poor channel conditions |
| N+4 | Device disassociated; Service cannot be guaranteed (e.g., lack of bandwidth) |
| N+5 | Device disassociated; Device misbehaviour detected (e.g., transmitting over the TXOP time) |
| N+6 | Device disassociated; Device does not support a required feature |
| N+7 | Device disassociated; AP-MLD leaves coordination group |
| (N+7)-65535 | Reserved |

**Table 2: WLAN status codes, extended to support user association transfer.**

| **WLAN status code** | **Description** |
|---|---|
| 0 | Operation completed successfully |
| 1 | Unspecified failure |
| 2-9 | Unused |
| 10 | Requested capability is too broad and hence cannot be supported |
| 11 | Reassociation denied, prior association cannot be identified and transferred |
| 12 | Association denied for a reason not specified in WLAN 802.11 standard |
| 13 | Requested authentication algorithm not supported |
| 14 | Unexpected authentication sequence number |
| 15 | Authentication rejected, the response to the challenge failed |
| 16 | Authentication rejected, the next frame in the sequence did not arrive in the expected window |
| 17 | Association denied; the access point is resource constrained |
| 18 | Association denied; the mobile station does not support all the data rates required by the BSS |
| 19 | Association denied; the mobile station does not support the short preamble option |
| 20 | Association denied; the mobile station does not support PBCC modulation |
| 21 | Association denied, mobile station does not support channel agility option |
| N | Association denied; the mobile station does not support the available bands |
| N+1 | Association denied; poor signal detected |
| N+2 | Association denied; the mobile station cannot be reached |
| N+3 | Association denied; the visiting station does not support a required feature |
| (N+4)-65535 | Reserved |

### Device perspective on association transfer

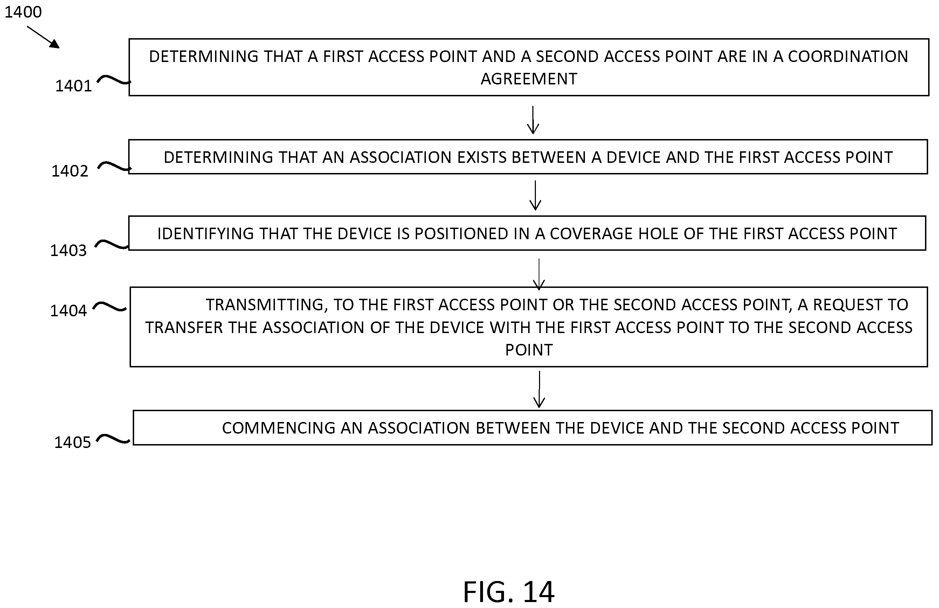

For completeness, a device 403 perspective on coverage hole mitigation is provided below in relation to FIG. 14.

FIG. 14 shows, by way of example, a flowchart of a method 1400 according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 1400 may be carried out by the device 403.

The method 1400 may comprise a first operation 1401 of determining that AP-MLD1 401 and AP-MLD2 402 are in a coordination agreement. This may be achieved actively by the device 403 sending probe requests with a field related to MAPC grouping or passively by overhearing beacons from AP-MLD1 401 or AP-MLD2 402 which indicate information about MAPC grouping.

The method 1400 may comprise a second operation 1402 of determining that an association exists between the device 403 and AP-MLD1 401.

The method 1400 may comprise a third operation 1403 of identifying that the device is positioned in a coverage hole of AP-MLD1 401. The device 403 may naturally know this information due to a failure of a wireless communication session or a reduction in quality of service. The discovery of a coverage hole will trigger the device 403 to look for an alternative AP-MLD to associate with.

The method 1400 may comprise a fourth operation 1404 of transmitting, to the MLD1 401 and/or AP-MLD2 402, a request to transfer the association of the device 403 with the MLD1 401 to AP-MLD2 402.

The method 1400 may comprise a fifth operation 1405 of commencing an association between the device 403 and AP-MLD2 402. As such, the association between the device 403 and AP-MLD2 402 is authorised.

Optionally, the method 1400 may also comprise the monitoring of the quality of the service delivered by AP-MLD2 402. The device 403 may send information about the monitoring activity to AL-MLD1 401. The device 403 may also send conformity signals to the AP-MLD2 402, which may forward them to AP-MLD1 401, which in turn would take decisions like disassociating the device 403 from the AP-MLD2 402. In this scenario the device 403 may to return to the previous association with AP-MLD1 401.

Optionally, the method 1400 may also comprise the device 403 choosing to disassociate from the AP-MLD2 402 and also the device 403 may indicate a reason code referring to the particular case of coverage hole mitigation (e.g., needs not fulfilled in coverage hole). The device 403 may return home by reassociating with AP-MLD1 401 and may provide a summary of the past session with AP-MLD2 402. For example, the device 403 can provide a report on a past session. This information can be used by the AP-MLD1 401 to making decisions in the future (e.g., not to transfer more associations to a given AP based on a quality of service of the transfer association).

### Example Apparatus

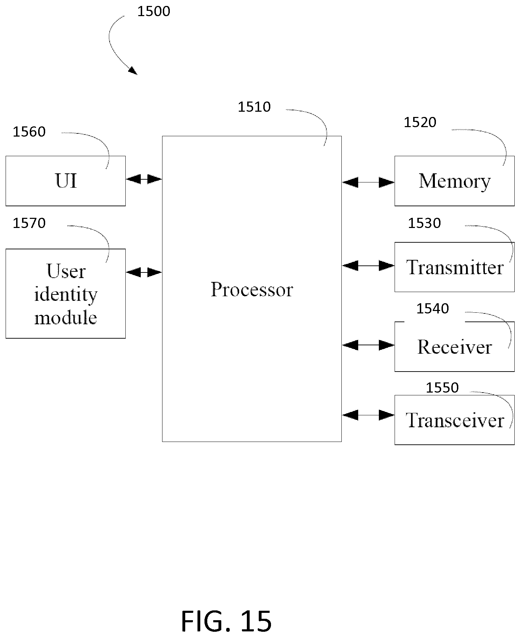

FIG. 15 shows, by way of example, a block diagram of an apparatus capable of performing the method(s) as disclosed herein. Illustrated is device 1500, which may comprise, for example, a mobile communication device such as AP1 201 and/or AP2 202 and/or device 203 of FIG. 2. Comprised in device 1500 is processor 1510, which may comprise, for example, a single- or multi-core processor wherein a single-core processor comprises one processing core and a multi-core processor comprises more than one processing core. Processor 1510 may comprise, in general, a control device. Processor 1510 may comprise more than one processor. Processor 1510 may be a control device. Processor 1510 may comprise at least one application-specific integrated circuit, ASIC. Processor 1510 may comprise at least one field-programmable gate array, FPGA. Processor 1510 may be means for performing method steps in device 1500. Processor 1510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1500 may comprise memory 1520. Memory 1520 may comprise randomaccess memory and/or permanent memory. Memory 1520 may comprise at least one RAM chip. Memory 1520 may comprise solid-state, magnetic, optical and/or holographic memory, for example. Memory 1520 may be at least in part accessible to processor 1510. Memory 1520 may be at least in part comprised in processor 1510. Memory 1520 may be means for storing information. Memory 1520 may comprise instructions, such as computer instructions, that processor 1510 is configured to execute. When instructions configured to cause processor 1510 to perform certain actions are stored in memory 1520, and device 1500 overall is configured to run under the direction of processor 1510 using the instructions from memory 1520, processor 1510 and/or its at least one processing core may be considered to be configured to perform said certain actions. Memory 1520 may be at least in part external to device 1500 but accessible to device 1500.

Device 1500 may comprise a transmitter 1530. Device 1500 may comprise a receiver 1540. Transmitter 1530 and receiver 1540 may be configured to transmit and receive, respectively, information in accordance with at least one cellular or non-cellular standard. Transmitter 1530 may comprise more than one transmitter. Receiver 1540 may comprise more than one receiver. Transmitter 1530 and/or receiver 1540 may be configured to operate in accordance with global system for mobile communication, GSM, wideband code division multiple access, WCDMA, 5G, long term evolution, LTE, IS-95, wireless local area network, WLAN, e.g. Wi-Fi, Ethernet and/or worldwide interoperability for microwave access, WiMAX, standards, for example.

Device 1500 may comprise user interface, UI, 1560. UI 1560 may comprise at least one of a display, a keyboard, a touchscreen, a vibrator arranged to signal to a user by causing device 1500 to vibrate, a speaker and a microphone.

Device 1500 may comprise or be arranged to accept a user identity module 1570. User identity module 1570 may comprise, for example, a subscriber identity module, SIM, card installable in device 1500. A user identity module 1570 may comprise information identifying a subscription of a user of device 1500. A user identity module 1570 may comprise cryptographic information usable to verify the identity of a user of device 1500 and/or to facilitate encryption of communicated information and billing of the user of device 1500 for communication effected via device 1500.

Processor 1510 may be furnished with a transmitter arranged to output information from processor 1510, via electrical leads internal to device 1500, to other devices comprised in device 1500. Such a transmitter may comprise a serial bus transmitter arranged to, for example, output information via at least one electrical lead to memory 1520 for storage therein. Alternatively to a serial bus, the transmitter may comprise a parallel bus transmitter. Likewise processor 1510 may comprise a receiver arranged to receive information in processor 1510, via electrical leads internal to device 1500, from other devices comprised in device 1500. Such a receiver may comprise a serial bus receiver arranged to, for example, receive information via at least one electrical lead from receiver 1540 for processing in processor 1510. Alternatively to a serial bus, the receiver may comprise a parallel bus receiver.

Processor 1510, memory 1520, transmitter 1530, receiver 1540, NFC transceiver 1550, UI 1560 and/or user identity module 1570 may be interconnected by electrical leads internal to device 1500 in a multitude of different ways. For example, each of the aforementioned devices may be separately connected to a master bus internal to device 1500, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered mere embodiments. However, it should be noted that the description of these embodiments is given by way of example only and that various modifications may be made without departing from the scope as defined by the appended claims.

## Claims

1. An apparatus, comprising:
means for determining that a first access point and a second access point are in a coordination agreement;
means for determining that an association exists between a device and the first access point;
means for transmitting, to the second access point, a discovery request, wherein the discovery request contains an inquiry as to whether the second access point will accept transfer of the association with the device;
means for receiving, from the second access point, a discovery response indicating that the second access point accepts the discovery request to transfer the association with the device; and
means for negotiating, between the first access point and the second access point, terms of the association between the device and the second access point.

2. The apparatus of claim 1, further comprising:
means for authorising the association between the device and the second access point, wherein the authorising comprises transmitting, to the second access point, user association information for the device.

3. The apparatus of any preceding claim, wherein the means for determining that a first access point and a second access point are in the coordination agreement, comprises means for determining that the first access point and second access point are part of a multi-access point coordination, MAPC, group.

4. The apparatus of any preceding claim, wherein the user association information for the device comprises at least one of the following:
a unique identifier for the device;
a medium access control, MAC, address of the device;
the terms of the association between the device and the second access point.

5. The apparatus of any preceding claim, wherein the discovery request or the discovery response comprises at least one association capability for the association between the second access point and the device.

6. The apparatus of any preceding claim, wherein the means for negotiating terms of an association between the device and the second access point comprises transmitting, to the second access point, a user association record of the device.

7. The apparatus of any preceding claim, further comprising
means for transmitting, to the second access point, a disassociation request to terminate the association between the device and the second access point; and
means for receiving, from the second access point, an acknowledgement of the disassociation request.

8. An apparatus, comprising:
means for determining that a first access point and a second access point are in a coordination agreement;
means for determining that an association exists between a device and the first access point;
means for transmitting, to the first access point, a discovery request, wherein the discovery request contains an inquiry as to whether the first access point will accept transfer of the association with the device;
means for receiving, from the first access point, a discovery response indicating that the first access point accepts the discovery request to transfer the association with the device; and
means for negotiating, between the first access point and the second access point, terms of the association between the device and the second access point.

9. The apparatus of claim 8, further comprising:
means for authorising the association between the device and the second access point, wherein the authorising comprises receiving, from the first access point, user association information for the device.

10. The apparatus of any of claims 8 to 9, wherein at least one of the discovery request or the discovery response comprises at least one association capability for association between the second access point and the device.

11. The apparatus of any of claims 8 to 10, wherein the means for negotiating terms of an association between the device and the second access point comprises receiving, from the first access point, a user association record of the device.

12. The apparatus of any of claims 8 to 11, further comprising
means for transmitting, to the first access point, a disassociation request to terminate the association between the device and the second access point; and
means for receiving, from the first access point, an acknowledgement of the disassociation request.

13. An apparatus, comprising:
means for determining that a first access point and a second access point are in a coordination agreement;
means for determining that an association exists between a device and the first access point;
means for identifying that the device is positioned in a coverage hole of the first access point;
means for transmitting, to the first access point or the second access point, a request to transfer the association of the device with the first access point to the second access point; and
means for commencing an association between the device and the second access point.

14. The apparatus of any of claims 13, further comprising at least one of the following:
means for monitoring the association between the device and the second access point;
means for transmitting, to the first access point or the second access point, a disassociation request to terminate the association between the device and the second access point; or
means for receiving, from the first access point or the second access point, an acknowledgement of the disassociation request.

15. The apparatus of any preceding, wherein the apparatus is one of: the first access point of claims 1-7, the second access point of claim 8-12 or the device of claims 13-14.
